# EUROPÄISCHE PATENTSCHRIFT

(11) **EP 3 022 741 B1**
(45) Veröffentlichungstag und Bekanntmachung des Hinweises auf die Patenterteilung: **23.08.2017**
(21) Anmeldenummer: 14724658.1
(22) Anmeldetag: 29.04.2014
(51) Int. Cl.: B01D 53/04, G21F 9/02, G21D 3/06, G21F 7/015

(54) **BETRIEBSVERFAHREN FÜR EIN BELÜFTUNGSSYSTEM ZUM EINSATZ WÄHREND EINES SCHWEREN STÖRFALLS IN EINER KERNTECHNISCHEN ANLAGE**
PROCESS FOR USE OF A VENTILATION SYSTEM DURING HEAVY INCIDENT IN A NUCLEAR INSTALLATION
PROCÉDÉ POUR L'USAGE D'UN SYSTÈME DE VENTILATION PENDENT UN INCIDENT GRAVE DANS UNE INSTALLATION NUCLÉAIRE

(30) Priorität: 19.07.2013 DE 102013214230
(43) Veröffentlichungstag der Anmeldung: 25.05.2016
(73) Patentinhaber: AREVA GmbH, 91052 Erlangen (DE)
(72) Erfinder: HILL, Axel, 64589 Stockstadt (DE)
(74) Vertreter: Kugler, Jörg
(86) Internationale Anmeldenummer: PCT/EP2014/058721
(87) Internationale Veröffentlichungsnummer: WO 2015/007409

(56) Entgegenhaltungen:
- EP-A1- 0 307 581
- DE-A1- 3 418 972
- DE-A1- 19 650 266
- US-A- 3 890 121
- US-A- 4 369 048

## Beschreibung

In einem Kernkraftwerk muss bei Stör- oder Unfallsituationen abhängig vom jeweiligen Störfall und von gegebenenfalls eingeleiteten Gegenmaßnahmen mit einer möglicherweise signifikanten Freisetzung von radioaktiven Spaltprodukten, insbesondere Jod, Aerosole und Edelgasen gerechnet werden. Durch Leckagen des Containments muss hierbei, bevor es zu einer Freisetzung in die Kraftwerksumgebung kommt, auch mit einer Freisetzung und Verteilung von Aktivität in den Kraftwerksgebäuden (z. B. Hilfsanlagengebäude, Schaltanlage, Warte, etc.) ausgegangen werden. Hierbei stellt insbesondere, neben der Freisetzung von aerosolgebundener Aktivität, die Freisetzung von Edelgasen ein Problem für das Kraftwerkspersonal dar.

Zu einer massiven Edelgasfreisetzung kommt es unter Umständen auch bei der Einleitung einer gefilterten Druckentlastung und der Ausbildung einer Edelgaswolke über dem Kraftwerksgelände. Je nach Wetterlage kann eine längerfristige Belastung nicht vollkommen ausgeschlossen werden.

Für die Einleitung von sogenannten Accident-Management Maßnahmen ist es zwingend erforderlich, dass die Bedingungen in der auch als Leitstand oder Leitwarte bezeichneten Warte einen Aufenthalt des Betriebspersonals ermöglichen, ohne dass es zu einer unzulässigen Strahlenbelastung und Kontamination des Personals kommt.

Bei auslegungsüberschreitenden Störfällen mit "Station Black-Out" (SBO) stehen die bestimmungsgemäßen bzw. normalbetrieblichen Lüftungs- und Filteranlagen nicht mehr zur Verfügung, um die wesentlichen lüftungstechnischen Parameter zur Aufrechterhaltung der Begehbarkeit der Warte zu gewährleisten.

Bisherige Konzepte sehen zur Beherrschung derartiger Szenarien eine Isolation der Warte vor. Die Versorgung erfolgt beispielsweise mit mobilen Belüftungsanlagen, die mit verschiedenen Filtern ausgestattet sind. Eine zufriedenstellende Edelgasrückhaltung ist mit diesen Anlagen nicht möglich.

Andere Konzepte versorgen die Warte mit gespeicherter Druckluft. Die Lagerhaltung in Druckbehältern für einen größeren Zeitraum ist jedoch sehr aufwändig und daher begrenzt. Ein modularer und mobiler Systemaufbau ist praktisch nicht möglich. Druckspeicherkonzepte erfordern überdies einen hohen Aufwand bei einer Nachrüstung in laufenden Anlagen.

Der Erfindung liegt die Aufgabe zugrunde, ein Verfahren zum Betreiben eines möglichst einfach und kompakt gehaltenen Belüftungssystems für einen Leitstand einer kerntechnischen Anlage oder einen ähnlichen von Betriebspersonal begehbaren Raum anzugeben, welches bei schweren Störfällen mit Freisetzung von radioaktiver Aktivität zumindest für eine Zeitspanne von einigen Stunden eine Zufuhr von dekontaminierter Frischluft ermöglicht, so dass es zu einer möglichst geringen Strahlenbelastung von im Leitstand anwesendem Betriebspersonal kommt. Insbesondere soll dabei der Anteil von radioaktiven Edelgasen in der dem Leitstand zugeführten Frischluft möglichst gering sein. Das Belüftungssystem soll ferner einen möglichst passiven Charakter besitzen und nur wenig elektrische Energie verbrauchen.

Die Aufgabe wird erfindungsgemäß gelöst durch ein Verfahren mit den Merkmalen des Anspruchs 1.

Vorteilhafte Ausgestaltungen gehen aus der nachfolgenden detaillierten Beschreibung hervor.

Das zur Durchführung des erfindungsgemäßen Verfahrens verwendete Belüftungssystem weist unter anderem vorteilhafterweise ein Aerosol- und Jodfiltermodul auf. Die Ansaugluft in der Zuluftleitung wird hierbei über ein Gebläse angesaugt und über Schwebstofffilter zur Abscheidung der Aerosole geführt. Nach der Abscheidung der Schwebstoffe werden vorteilhafterweise radioaktive Jodverbindungen in einem Aktivkohlefilterbett abgeschieden. Zur Abscheidung des radioaktiven Methyljodids durch Isotopentausch oder Salzbildung kann imprägnierte Aktivkohle eingesetzt werden. Dem Aktivkohlebett ist vorteilhafterweise zur Rückhaltung von Abrieb ein Partikelfilter nachgeschaltet.

Die so gefilterte Luft wird dann in einem zweiten Prozessschritt einem Edelgasmodul zugeführt. Das Edelgasmodul beinhaltet im Wesentlichen zwei Adsorberkolonnen in Zwillingskonfiguration, die mit Adsorbens/Adsorbensien, vorzugsweise Aktivkohle, gefüllt sind. Das Adsorbens der Kolonnen kann auch aus mehreren Schichten von Aktivkohle und/oder Zeolith und/oder Molekularsieben aufgebaut sein.

Die Zuluft tritt in die erste Adsorberkolonne ein, wobei die Edelgase wie z. B. Xenon, Krypton durch eine dynamische Adsorption bei ihrem Durchlauf durch die Kolonne verzögert werden. Nach der Kolonne ist zweckmäßigerweise ein Filter zur Rückhaltung von Adsorberpartikeln angeordnet.

Die Abluft aus dem zu versorgenden Raumbereich wird gleichzeitig über die zweite Adsorberkolonne geführt und bewirkt dort eine Rückspülung der zuvor akkumulierten Edelgasaktivität, so dass diese Kolonne wieder zur Beladung nach der Umschaltung bereit steht. Die Umschaltung wird spätestens kurz vor dem Durchbruch der Aktivität in der ersten Adsorberkolonne vorgenommen, wobei diese dann mit der Abluft rückgespült wird. Die Umschaltung wird vorzugsweise passiv durch ein Zeitglied oder eine Aktivitätsmessung ausgelöst.

Die Rückspülung wird durch ein Gebläse in der Abluftleitung unterstützt, wobei die Volumenvergrößerung des Abluftstroms durch den Unterdruck den Rückspülprozess der Edelgase verstärkt.

In der Abluftleitung der Warte befindet sich vorteilhafterweise eine Drossel, die zur passiven Überhitzung der Abluft und damit zu einer Verringerung der in der Abluft befindlichen Feuchtigkeit führt (Expansionstrocknung). Dadurch wird die Desorptionsgeschwindigkeit der Edelgase in der nachgeschalteten, zu spülenden Adsorberkolonne begünstigt.

In der Zuluftleitung zum Edelgasmodul befinden sich vorteilhafterweise eine Drossel und/oder ein Lufttrockner, um zu verhindern, dass zu hohe Feuchtigkeit auf die Edelgaskolonnen gefördert wird.

Das Edelgasmodul kann zusätzlich mit einem passiven Kühlspeicher zur Erhöhung der k-Werte ausgerüstet werden. Der k-Wert beschreibt in diesem Zusammenhang die Adsorptionskapazität des Adsorbermaterials für Edelgas in z. B. der Einheit cm³ Edelgas / g Adsorbens. Der k-Wert ist abhängig von der Temperatur, dem Druck und Feuchtegehalt des Gases. Er wird in der Regel empirisch ermittelt.

Die Adsorberkolonnen werden im Druckwechselverfahren betrieben, d. h. Unterdruck der zu spülenden Kolonne und Überdruck der zu beladenden Kolonne (jeweils in Relation zum Atmosphärendruck), um die k-Werte der Kolonnen zu verbessern und deren Abmessungen zu reduzieren. Der Überdruck in der von der Zuluft durchströmten Adsorberkolonne wird beispielsweise mit einem Einstellventil in der Zuluftleitung reguliert.

Die Abluft wird zusammen mit den rückgespülten Edelgasen in die Kraftwerksumgebung mit genügend Abstand zu der Zuluftansaugung abgegeben.

Das Belüftungssystem umfasst zweckmäßigerweise eine Steuerung und entsprechende Einstellorgane für Durchfluss und Drücke.

Die mit der Erfindung erzielten Vorteile bestehen insbesondere darin, dass neben den luftgetragenen Aktivitäten in Form von Aerosolen und Jod / Jodverbindungen (insbesondere Organojod) zugleich die radioaktiven Edelgase von der Zuluft der Warte zurückgehalten werden. Mit dem Druckwechsel- und Spülverfahren der Zwillingskolonnen können selbst langlebige Edelgasisotope wie Krypton-85 zuverlässig aus dem Zuluftstrom abgeschieden werden. Die zur Entfernung der Edelgase von dem Sorbens / Adsorbens benötigten Bedingungen werden passiv durch Expansionsüberhitzung unterstützt. Bedarf an elektrischem Betriebsstrom besteht im Wesentlichen nur für die Gebläse in der Zuluft- und der Abluftleitung sowie in geringem Umfang für die zugeordnete Steuereinheit und für die Umschaltmittel zur Umschaltung zwischen den Betriebszyklen. Dieser Bedarf kann problemlos mit einem autarken Energieversorgungsmodul (z. B. durch Batterien und/oder ein Dieselaggregat) für mindestens 72 h gedeckt werden.

Zusammengefasst werden zur Sicherstellung der Begehbarkeit der Warte folgende Funktionen gewährleistet:
- Isolation der Wartenlüftung von den restlichen Gebäudeteilen
- Überdruck gegenüber den angrenzenden Gebäuderäumen (z. B. < 1 mbar)
- Einhaltung der zulässigen Kohlenmonoxid- und Kohlendioxid-Konzentration
- Jodrückhaltung
- Aersolrückhaltung
- Rückhaltung der Edelgase (z. B. Kr, Xe)
- Begrenzung der Dosis (z. B. < 100 mSv/7d)
- Temperaturbegrenzung zur Einhaltung der I&C Temperatur-Qualifikationen
- Sicherstellung der oben genannten Funktionen für mindestens 72 h

Weitere Vorteile sind in stichpunktartiger Zusammenfassung:
- modularer und mobiler Systemaufbau
- geringer Aufwand und hohe Flexibilität bei Integration in laufende Anlagen
- geringer Wartungsaufwand
- eine aufwendige Lagerhaltung von atemfähiger Luft entfällt
- Abdeckung größerer Luftmengen (Luftwechsel) und Raumbereiche möglich

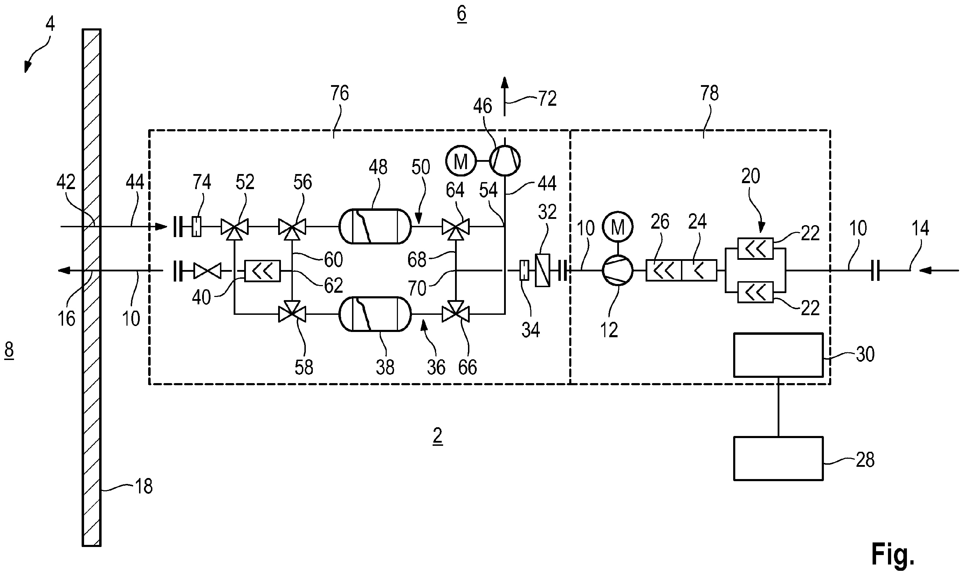

Ein Ausführungsbeispiel der Erfindung wird nachfolgend anhand einer Zeichnung näher erläutert. Die einzige Figur gibt nach Art eines Blockfließbildes einen schematischen und stark vereinfachten Überblick über ein Belüftungssystem für einen Leitstand eines Kernkraftwerkes.

Das in der Figur dargestellte Störfall-Belüftungssystem, kurz Belüftungssystem 2 dient der Frischluftzufuhr eines auch als Leitwarte oder im Englischen als Main Control Room (MCR) bezeichneten Leitstandes 4 eines Kernkraftwerkes 6 in Unfall- oder Störfallsituationen, insbesondere in der Anfangsphase eines schweren Störfalles mit Freisetzung von nuklearen Spaltprodukten innerhalb des Kraftwerksgebäudes und gegebenenfalls auch in der Umgebung.

In derartigen Szenarien, die üblicherweise mit dem Ausfall der Eigenstromversorgung des Kernkraftwerkes 6 und damit auch mit dem Ausfall des normalbetrieblichen Belüftungssystems (nicht dargestellt) für den Leitstand 4 einhergehen, kommt es in besonderem Maße darauf an, den Leitstand 4 noch für eine gewisse Zeitspanne - etwa bis zu 72 h nach dem Einsetzen des Störfalls - ohne Gefährdung des Bedienpersonals besetzt halten zu können, um anfängliche Gegenmaßnahmen einzuleiten und zu überwachen. Möglicherweise muss das Bedienpersonal auch so lange in dem Leitstand 4 verharren, bis nach dem Abklingen eines anfänglichen Aktivitätsmaximums in der Umgebung eine sichere Evakuierung möglich ist.

Zu diesem Zweck ist das Belüftungssystem 2 für den Leitstand 4 einerseits für eine Zufuhr von dekontaminierter und sauerstoffreicher Frischluft - auch Zuluft genannt - aus der Umgebung des Leitstandes 4 oder des Kraftwerksgebäudes ausgelegt und mit entsprechenden Filter- und Reinigungsstufen ausgestattet. Andererseits bewirkt das Belüftungssystem 2 einen Abtransport von verbrauchter und kohlendioxidreicher Luft - auch Abluft genannt - aus dem Leitstand 4 in die Umgebung. Im Gegensatz zu anderen, bislang gebräuchlichen Konzepten ist dabei weder eine Frischluftzufuhr aus einem zugehörigen Druckluftspeichersystem noch eine nennenswerte Rezirkulation und Wiederaufbereitung der Luft im Innenraum des Leitstandes 4 vorgesehen.

Konkret ist an den zumindest näherungsweise hermetisch gegenüber der äußeren Umgebung gekapselten Innenraum 8 des Leitstandes 4 eine auch als Frischluftzufuhrleitung oder kurz Frischluftleitung bezeichnete Zuluftleitung 10 angeschlossen, über die während des Betriebes des Belüftungssystems 2 mit Hilfe eines Gebläses 12 Frischluft aus der Umgebung angesaugt und in den Innenraum 8 gefördert wird. Der Ansaugeinlass oder kurz Einlass 14 der Zuluftleitung 10 kann in einiger Entfernung zum Leitstand 4 liegen, insbesondere außerhalb des Kraftwerksgebäudes. Je nach Störfallverlauf kann die über den Einlass 14 angesaugte Frischluft dennoch erheblich mit radioaktiven Spaltprodukten, insbesondere in Gestalt von Aerosolen, Jod und Jodverbindungen sowie Edelgassen belastet sein. Diese Bestandteile sollten möglichst vollständig und zuverlässig aus dem Frischluftstrom - auch Zuluftstrom genannt - entfernt werden, bevor dieser durch eine Durchführung 16 in der Umfassungswand 18 (nur ausschnittsweise dargestellt) hindurch in den Innenraum 8 des Leitstandes 4 eingeleitet wird.

Hierzu ist in Richtung des Frischluftstroms gesehen stromabwärts des Einlasses 14 eine erste Filterstufe in Gestalt eines Aerosolfilters 20 in die Zuluftleitung 10 geschaltet, hier im Beispiel realisiert durch zwei strömungsmäßig parallel geschaltete HEPA-Filter 22 (HEPA = High Efficiency Particulate Airfilter, zu Deutsch sinngemäß Schwebstofffilter). Die HEPA-Filter 22 bewirken demnach eine hocheffiziente Abscheidung der auch als Schwebeteilchen bezeichneten Aerosolpartikel aus dem Frischluftstrom, insbesondere in Bezug auf die Isotope Te, Cs, Ba, Ru, Ce, La.

Weiter stromabwärts ist eine zweite Filterstufe mit einem Jodfilter 24 und einem nachgeschalteten Partikelfilter 26 in die Zuluftleitung 10 geschaltet. Der Jodfilter 24 ist bevorzugt in Gestalt eines Aktivkohlefilterbetts mit einer Schichtdicke von beispielsweise 0,1 bis 0,5 m verwirklicht. Nach der zuvor im Aerosolfilter 20 erfolgten Abscheidung der Schwebstoffe werden in dem Jodfilter 24 radioaktive Jodverbindungen und elementares Jod beispielsweise mit einem k-Wert > 8 bei Kontaktzeiten von 0,1 bis 0,5 s abgeschieden. Zur Abscheidung des radioaktiven Methyljodids durch Isotopentausch oder Salzbildung kann imprägnierte Aktivkohle (z. B. mit Kaliumjodid als Imprägnierungsmittel) eingesetzt werden. Der dem Jodfilter 24 nachgeschaltete Partikelfilter 26 ist zur Rückhaltung von Abrieb aus dem Aktivkohlebett vorgesehen.

Stromabwärts der zweiten Filterstufe ist ein Fördergebläse oder kurz Gebläse 12 zum Transport des Frischluftstroms in die Zuluftleitung 10 geschaltet. Das vorzugsweise elektrisch angetriebene Gebläse 12 besitzt eine Ansaugleistung im Bereich von beispielsweise 1.000 bis 6.000 m³/h.

Zur Bereitstellung des erforderlichen Betriebsstroms ist ein autarkes, von der normalbetrieblichen Eigenstromversorgung und vorzugsweise auch vom gewöhnlichen (anlagenweiten) Notstromnetz unabhängiges Stromversorgungsmodul 28 vorgesehen, etwa auf der Basis von elektrischen Batterien / Akkumulatoren und/oder eines Dieselaggregats. Das Stromversorgungsmodul 28 aktiviert sich im Anforderungsfall vorzugsweise eigenständig nach Art einer unterbrechungsfreien Stromversorgung oder wird alternativ über eine zugeordnete Steuereinheit 30 angesteuert.

Weiter stromabwärts ist optional ein auch als Kühlfalle bezeichneter Lufttrockner 32 in die Zuluftleitung 10 geschaltet, mit dem sich kondensierbare Bestandteile aus den Frischluftstrom abtrennen lassen. Es kann sich beispielsweise um eine passive Kühlfalle mit Silikagel und/oder Eis als Trocknungsmittel handeln. Dadurch wird der Feuchtigkeitsgehalt des in die nachgeschalteten Funktionseinheiten (siehe unten) strömenden Frischluftstroms reduziert. Demselben Zweck dient eine alternativ oder zusätzlich vorhandene, hier im Ausführungsbeispiel in Strömungsrichtung der Frischluft gesehen hinter dem Lufttrockner 32 angeordnete Drossel 34, welche nach dem Prinzip der Expansionstrocknung auf den Frischluftstrom einwirkt. Es kann sich dabei insbesondere um ein regelbares Drosselventil handeln.

Im Anschluss an die Filterung und Trocknung durchströmt der Frischluftstrom bei entsprechender Stellung zugehöriger Stellorgane (siehe unten) beispielsweise den Leitungsabschnitt 36, in den eine Edelgas-Adsorberkolonne oder kurz Adsorberkolonne 38 geschaltet ist. Dabei werden die im Frischluftstrom enthaltenen Edelgase, vor allem Xenon und Krypton, im Rahmen eines sich dynamisch einstellenden Gleichgewichts durch physikalische und/oder chemische Adsorption an das in der Adsorberkolonne 38 vorhandene Adsorbens gebunden und somit in dem Leitungsabschnitt 36 verzögert, solange die Adsorptionskapazität der Adsorberkolonne 38 noch nicht erschöpft ist. Als Adsorbens können insbesondere ein oder mehrere Schichten Aktivkohle und/oder Zeolith und/oder Molekularsiebe vorgesehen sein.

Der Adsorberkolonne 38 ist ein zum Leitstand 4 führender Leitungsabschnitt nachgeschaltet, in den ein Partikelfilter 40 zur Rückhaltung von abgelösten Adsorberpartikeln geschaltet ist.

Schließlich tritt der auf die beschriebene Weise dekontaminierte Frischluftstrom über die Durchführung 16 durch die Umfassungswand 18 des Leitstandes 4 in dessen Innenraum 8 ein, so dass diesem unverbrauchte, sauerstoffreiche Atemluft mit einem für das Betriebspersonal zulässigen Aktivitätsgrad zugeführt wird.

Vervollständigt wird der Luftaustausch durch die Abfuhr von verbrauchter, kohlendioxidreicher Atemluft aus dem Leitstand 4 über die mit dessen Innenraum 8 verbundene und durch die Durchführung 42 in der Umfassungswand 18 in die Umgebung geführte Abluftleitung 44, in die zur Unterstützung des Gastransports ein Gebläse 46 geschaltet ist. Dabei handelt es sich vorzugsweise um ein elektrisch angetriebenes Gebläse 46, das ebenso wie das Gebläse 12 über das Stromversorgungsmodul 28 mit elektrischem Strom versorgt wird.

Da das Adsorptionsvermögen der auf den Frischluftstrom einwirkenden Adsorberkolonne 38 bei praktikabler Baugröße üblicherweise schon nach relativ kurzer Betriebsdauer erschöpft ist, ist das Belüftungssystem 2 für eine Rückspülung der adsorbierten Edelgase in die Umgebung im laufenden Betrieb ausgelegt. Zu diesem Zweck sind zwei im Wesentlichen baugleiche Adsorberkolonnen 38 und 48 vorhanden, die über entsprechende Leitungsverzeigungen und -anschlüsse sowie Stellorgane, hier in Form von 3-Wege-Ventilen, derart mit Frischluft oder mit Abluft beaufschlagt werden, dass eine der beiden Adsorberkolonnen 38 und 48 wie bereits beschrieben im Adsorptionsbetrieb auf den Frischluftstrom einwirkt, während die andere zeitgleich im Desorptionsbetrieb bzw. Spülbetrieb durch den Abluftstrom rückgespült und somit für den nächsten Adsorptionszyklus bereit gemacht wird. Durch Umschalten der Stellorgane kann die Rolle der Adsorberkolonnen 38 und 48 vertauscht und somit in Bezug auf die jeweilige Kolonne zyklisch zwischen Adsorptionsbetrieb und Desorptionsbetrieb gewechselt werden.

Bei dem in der Figur dargestellten Ausführungsbeispiel ist diese Funktionalität dadurch realisiert, dass die eine Adsorberkolonne 38 in dem Leitungsabschnitt 36 angeordnet ist, und die andere Adsorberkolonne 48 in strömungsmäßiger Antiparallelschaltung in dem Leitungsabschnitt 50. Beide Leitungsabschnitte 36 und 50 vereinen sich auf der einen Seite in dem 3-Wege-Ventil 52 und auf der anderen Seite in der auf der Saugseite des Gebläses 46 angeordneten Vereinigung 54. Ferner ist auf der einen Seite zwischen dem 3-Wege-Ventil 52 und den beiden Adsorberkolonnen 38, 48 eine durch die beiden 3-Wege-Ventile 56 und 58 schaltbare Querverbindung 60 zwischen die beiden Leitungsabschnitte 36 und 50 geschaltet, die über einen T-Anschluss 62 mit dem zum Partikelfilter 40 führenden Abschnitt der Zuluftleitung 10 verbunden ist. Auf der anderen Seite ist in analoger Ausgestaltung zwischen den Adsorberkolonnen 38, 48 und der Vereinigung 54 eine durch die beiden 3-Wege-Ventile 64 und 66 schaltbare Querverbindung 68 geschaltet, die über einen T-Anschluss 70 mit dem von der Drossel 34 kommenden Abschnitt der Zuluftleitung 10 verbunden ist.

Bei entsprechend gewählten Ventilstellungen strömt wie bereits weiter oben beschrieben die von der Drossel 34 kommende Zuluft über den T-Anschluss 70, das 3-Wege-Ventil 66, die in der Figur untere Adsorberkolonne 38, das 3-Wege-Ventil 58 und den T-Anschluss 62 zum Partikelfilter 40 und von dort weiter zum Leitstand 4. In dem anderen Leitungsstrang strömt die vom Leitstand 4 kommende Abluft über das 3-Wege-Ventil 52, das 3-Wege-Ventil 56, die in der Figur obere Adsorberkolonne 48 und das 3-Wege-Ventil 64 zum Sauganschluss des Gebläses 46 und von dort weiter zum einem Abluftkamin oder zu einem sonstigen Auslass 72, der zweckmäßigerweise in einiger Entfernung zum Einlass 14 für Frischluft liegt.

Das heißt, die im vorherigen Zyklus in der Adsorberkolonne 48 durch Adsorption akkumulierten Edelgase werden in diesem Betriebsmodus durch die weitgehend edelgasfreie Abluft aus dem Innenraum 8 des Leitstandes 4 von dem Adsorbens desorbiert und mit dem Abluftstrom in die Umgebung zurückgespült. Die Rückspülung wird durch das stromabwärts der rückgespülten Adsorberkolonne 48 angeordnete Gebläse 46 unterstützt, wobei die Volumenvergrößerung des Abluftstroms durch den Unterdruck den Rückspülprozess der Edelgase verstärkt.

In der Abluftleitung 44 von der Warte befindet sich in Richtung des Abluftstroms gesehen stromaufwärts des 3-Wege-Ventils 52 und somit stromaufwärts der gerade im Spülbetrieb befindlichen Adsorberkolonne 48 eine Drossel 74, vorzugsweise in Gestalt eines einstellbaren Drosselventils, die zur passiven Überhitzung der Abluft und damit zu einer Verringerung der in der Abluft befindlichen Feuchtigkeit führt (Expansionstrocknung). Dadurch wird die Desorptionsgeschwindigkeit der Edelgase in der nachgeschalteten Adsorberkolonne 48 begünstigt.

Nach der Umschaltung vertauschen sich die Rollen der Adsorberkolonnen 38 und 48. Nun strömt die Frischluft von der Drossel 34 kommend über das 3-Wege-Ventil 64, die Adsorberkolonne 48 und das 3-Wege-Ventil 56 zum Partikelfilter 40 und von dort zum Leitstand 4. Die Abluft aus dem Leitstand 4 hingegen strömt von der Drossel 74 kommend über das 3-Wege-Ventil 52, das 3-Wege-Ventil 58, die Adsorberkolonne 38 und das 3-Wege-Ventil 66 zum Gebläse 46 und von dort zum Auslass 72. Die zuvor beladene Adsorberkolonne 38 wird nun durch die Abluft rückgespült, während die Adsorberkolonne 48 für eine Reinigung der Frischluft und dementsprechend für eine erneute Beladung zur Verfügung steht.

Zur Steuerung der Umschaltvorgänge mittels der 3-Wege-Ventile 52, 56, 58, 64, 66 ist eine Steuereinheit 30 vorgesehen, welche zweckmäßigerweise auch die beiden Gebläse 12 und 46 und gegebenenfalls weitere Stellorgane für Durchfluss und Drücke ansteuert. Für den Fachmann versteht sich, dass die Umschaltfunktionalität auch mittels anderer Leitungstopologien und Stellorgane in äquivalenter Weise realisiert werden kann.

Wie durch die gestrichelten Umrandungslinien angedeutet, ist das Belüftungssystem 2 vorzugsweise modular aus einem Edelgasmodul 76, einem Jod- und Aerosolmodul 78 und einem Stromversorgungsmodul 28 aufgebaut. Die Grenzen zwischen den Modulen können im Detail natürlich auch anders gewählt sein, und es kann weitere Module oder Submodule geben. Die einzelnen Module sind beispielsweise in Standardcontainern transportabel untergebracht, so dass ein einfacher Transport zum Einsatzort und dort ein einfacher Aufbau durch Verbindung der zugehörigen, standardisierten Leitungsanschlüsse erfolgen kann.

Auch wenn die Beschreibung bislang auf die Belüftung des (zentralen) Leitstandes eines Kernkraftwerkes ausgerichtet war, so ist doch klar, dass das Belüftungssystem 2 auch für die Störfall-Belüftung von anderen Raumbereichen innerhalb eines Kernkraftwerkes oder allgemeiner einer kerntechnischen Anlage - etwa auch Brennelementlager, Wiederaufbereitungsanlagen, brennstoffverarbeitende Anlagen etc. - verwendet werden kann, etwa von Hilfsanlagengebäuden, Schaltanlagenräumen, Messwarten oder anderen Bedien- und Überwachungsräumen. Für derartige Räume wird in zusammenfassender, schlagwortartiger Weise auch die Bezeichnung "Betriebsraum" verwendet.

**Bezugszeichenliste**

| | | | |
|---|---|---|---|
| 2 | Belüftungssystem | 64 | 3-Wege-Ventil |
| 4 | Leitstand | 66 | 3-Wege-Ventil |
| 6 | Kernkraftwerk | 68 | Querverbindung |
| 8 | Innenraum | 70 | T-Anschluss |
| 10 | Zuluftleitung | 72 | Auslass |
| 12 | Gebläse | 74 | Drossel |
| 14 | Einlass | 76 | Edelgasmodul |
| 16 | Durchführung | 78 | Jod- und Aerosolmodul |
| 18 | Umfassungswand | | |
| 20 | Aerosolfilter | | |
| 22 | HEPA-Filter | | |
| 24 | Jodfilter | | |
| 26 | Partikelfilter | | |
| 28 | Stromversorgungsmodul | | |
| 30 | Steuereinheit | | |
| 32 | Lufttrockner | | |
| 34 | Drossel | | |
| 36 | Leitungsabschnitt | | |
| 38 | Adsorberkolonne | | |
| 40 | Partikelfilter | | |
| 42 | Durchführung | | |
| 44 | Abluftleitung | | |
| 46 | Gebläse | | |
| 48 | Adsorberkolonne | | |
| 50 | Leitungsabschnitt | | |
| 52 | 3-Wege-Ventil | | |
| 54 | Vereinigung | | |
| 56 | 3-Wege-Ventil | | |
| 58 | 3-Wege-Ventil | | |
| 60 | Querverbindung | | |
| 62 | T-Anschluss | | |

## Patentansprüche

1. Verfahren zum Betreiben eines Belüftungssystems (2) für einen von Betriebspersonal begehbaren Betriebsraum in einer kerntechnischen Anlage, insbesondere einen Leitstand (4) in einem Kernkraftwerk (6), mit
• einer von einem externen Einlass (14) zu dem Betriebsraum geführten Zuluftleitung (10), in die ein erstes Gebläse (12) und eine erste Edelgas-Adsorberkolonne (z. B. 38) geschaltet sind,
• einer von dem Betriebsraum zu einem externen Auslass (72) geführten Abluftleitung (44), in die ein zweites Gebläse (46) und eine zweite Edelgas-Adsorberkolonne (z. B. 48) geschaltet sind, und
• Umschaltmitteln zur Vertauschung der Rollen von erster und zweiter Edelgas-Adsorberkolonne (38, 48),
wobei das erste Gebläse (12) in Strömungsrichtung der Zuluft gesehen stromaufwärts der ersten Edelgas-Adsorberkolonne (z. B. 38) angeordnet ist und das zweite Gebläse (46) in Strömungsrichtung der Abluft gesehen stromabwärts der zweiten Edelgas-Adsorberkolonne (z. B. 48) angeordnet ist,
wobei simultan eine der beiden Edelgas-Adsorberkolonnen (z. B. 38) von Zuluft durchströmt und dadurch mit radioaktiven Edelgasen beladen wird und die andere Edelgas-Adsorberkolonne (z. B. 48) von Abluft durchströmt und dadurch rückgespült wird, und die Rollen der beiden Edelgas-Adsorberkolonnen (38, 48) durch Umschaltung vertauscht werden, sobald die Adsorptionskapazität der aktuell beladenen Edelgas-Adsorberkolonne (z. B. 38) erschöpft ist,
und wobei in Relation zum Atmosphärendruck Unterdruck in der zu spülenden Edelgas-Adsorberkolonne (z. B. 48) und Überdruck in der zu beladenden Edelgas-Adsorberkolonne (z. B. 38) eingestellt wird.

## Claims

1. A method for operating a ventilation system (2) for an operating room accessible for operators in a nuclear facility, in particular a control room (4) in a nuclear power plant (6), having
• an intake-air line (10) which is led from an external inlet (14) to the operating room and into which a first fan (12) and a first inert-gas adsorber column are switched,
• an exhaust-air line (44) which is led from the operating room to an external outlet (72) and into which a second fan (46) and a second first inert-gas adsorber column are switched, and
• commutation means for exchanging the roles of the first and second inert-gas adsorber columns (38, 48),
wherein the first fan (12) is arranged upstream of the first inert-gas adsorber column, viewed in the flow direction of the intake air, and the second fan (12) is arranged downstream of the second inert-gas adsorber column, viewed in the flow direction of the exhaust air,
wherein simultaneously one of the two inert-gas adsorber columns is flowed through by intake air and thus charged with radioactive inert gases, and the other inert-gas adsorber column is flowed through by exhaust air and thus, backwashed, and the roles of the two inert-gas adsorber columns (38, 48) are exchanged by means of commutation, as soon as the adsorption capacity of the currently charged inert-gas adsorber column is exhausted,
and wherein, in relation to the atmospheric pressure, an underpressure is set in the inert-gas adsorber column to be backwashed, and an overpressure is set in the inert-gas adsorber column to be charged.

## Revendications

1. Procédé pour faire fonctionner un système de ventilation (2) qui est destiné à un espace d'exploitation pouvant être emprunté par le personnel d'exploitation dans une installation nucléaire, en particulier un poste de contrôle (4) dans une installation nucléaire (6), comprenant
• un conduit (10) d'alimentation en air qui va d'une entrée externe (14) à l'espace d'exploitation et dans lequel sont montés un premier ventilateur (12) et une première colonne d'adsorption de gaz rares (par exemple 38),
• un conduit (44) d'évacuation d'air qui va de l'espace d'exploitation à une sortie externe (72) et dans lequel sont montés un second ventilateur (46) et une seconde colonne d'adsorption de gaz rares (par exemple 48), et
• des moyens de commutation permettant d'échanger les rôles de la première et de la seconde colonnes d'adsorption de gaz rares (38, 48),
dans lequel le premier ventilateur (12) est agencé en amont de la première colonne d'adsorption de gaz rares (par exemple 38), vu en direction d'écoulement d'alimentation en air, et le second ventilateur (46) est agencé en aval de la seconde colonne d'adsorption de gaz rares (par exemple 48), vu en direction d'écoulement d'alimentation en air,
dans lequel simultanément l'une des deux colonnes d'adsorption de gaz rares (par exemple 38) est parcourue par l'air alimenté, étant par cela chargée de gaz rares radioactifs, et l'autre colonne d'adsorption de gaz rares (par exemple 48) est parcourue par l'air évacué, étant par cela lavée à contrecourant, et les rôles des deux colonnes d'adsorption de gaz rares (38, 48) sont échangés par communutation, aussitôt que la capacité d'adsorption de la colonne d'adsorption de gaz rares (par exemple 38) actuellement chargée est épuisée,
et dans lequel une souspression est réglée dans la colonne d'adsorption de gaz rares (par exemple 48) à laver et une surpression est réglée dans la colonne d'adsorption de gaz rares (par exemple 38) à charger, en relation à la pression atmosphérique.
